(19) Europäisches Patentamt

European Patent Office

Office européen des brevets

(11) Veröffentlichungsnummer: **0 276 364 B1**

(12) **EUROPÄISCHE PATENTSCHRIFT**

(45) Veröffentlichungstag der Patentschrift: **11.11.92**

(21) Anmeldenummer: **87113019.1**

(22) Anmeldetag: **05.09.87**

(51) Int. Cl.⁵: **F16C 17/04**, F16C 41/02

(54) **Axiallageranordnung.**

(30) Priorität: **26.01.87 CH 254/87**

(43) Veröffentlichungstag der Anmeldung:
**03.08.88 Patentblatt 88/31**

(45) Bekanntmachung des Hinweises auf die
Patenterteilung:
**11.11.92 Patentblatt 92/46**

(84) Benannte Vertragsstaaten:
**FR GB IT NL SE**

(56) Entgegenhaltungen:
**DD-A- 203 601**
**DE-A- 2 113 250**
**DE-A- 2 612 552**
**DE-C- 330 881**
**FR-A- 2 544 032**

**SOVIET INVENTIONS ILLUSTRATED, P, O**
**Sektionen, Week D 41, 18. November 1981,**
**DERWENT PUBLICATIONS LTD., London, O**
**62 *SU-796 502***

(73) Patentinhaber: **MAAG Getriebe AG**
**Hardstrasse 219**
**CH-8023 Zürich(CH)**

(72) Erfinder: **Sigg, Hans**
**Rebbergstrasse 13**
**CH-8968 Mutschellen(CH)**

## Beschreibung

Die Erfindung bezieht sich auf eine Axiallageranordnung nach dem Oberbegriff des Anspruchs 1.

Bei einer bekannten Axiallageranordnung [DE-A-2 113 250] dieser Art ≪ werden zur Aufnahme der Axiallast mehrere Einzelgleitlager hintereinander angeordnet, wobei durch eine Differenzierung der Stuetzweiten von Gleitflaechen von auf der Welle hintereinander angeordneten Lagerbundbuchsen gegenueber konstanten Stuetzweiten der Gleitflaechen von Lagerringen Lagerspalte mit differenzierter Groesse vorhanden sind. Damit soll die Ueberlastung der Einzelgleitlager durch Teil- oder Maximalbelastung ausgeschlossen und die Axiallast auf die Einzelgleitlager proportional verteilt werden, sobald mit zunehmender Belastung der Axiallagerung sich durch die elastische Verformung der Lagerbundbuchsen die Differenzen der Lagerspalte in dem Mass verringern, dass sich auch in diesen Einzelgleitlagern ein Oeldruck aufbaut und die Lager entsprechend der Belastungszunahme hydrostatisch, den Groessendifferenzen der elastischen Verformung der Lagerbundbuchsen proportional, zu tragen beginnen. Im Zustand der Maximalbelastung der Axiallagerung sind die Differenzen der Stuetzweiten der Lagerbundbuchsen und der Lagerspalte ausgeglichen und jedes Einzelgleitlager traegt hydrostatisch eine gleichgrosse Teillast der Maximallast.

Somit bezieht sich diese Axiallageranordnung nur auf den fertigungsbedingten Ausgleich von ungleich grossen Lagerspalten, welche unter Ausnutzung der Bauteilelastizitaet der Lagerbundbuchsen und dem konstant aufgebrachten Schmieroeldruck die Axiallast gleichmaessig auf alle ihre Einzelgleitlager verteilt. Dabei ist nachteilig, dass einerseits nur die fertigungsbedingt ungleich grossen Lagerspalte ausgeglichen werden, was jedoch in unkontrollierbarer und unbeeinflussbarer Weise erfolgt. Zudem ist nachteilig, dass die verschiedenen Lagerspiele und die Fertigungs- und Montageungenauigkeiten mehr oder minder nur mit einem hohen Schmieroelstrom auszugleichen sind. Es ist daher der Aufwand an Verlustleistung und Nebeninstallationen sehr hoch.

≪ Aufgabe der Erfindung ist es, eine Axiallageranordnung fuer hohe Axialkraefte zu schaffen, bei der sich die Axialbelastung auf mehrere Stufen verteilt und welche die Moeglichkeit der Einstellung der Lagerbelastung pro Stufe aufweist. ≫

Diese Aufgabe wird erfindungsgemaess geloest durch die Merkmale des kennzeichnenden Teils des Anspruchs 1. Ausserdem kann eine solche Axiallageranordnung auch noch die Merkmale der Ansprueche 2 bis 16 aufweisen.

Die Vorteile der erfindungsgemaessen Axiallageranordnung bestehen in der sehr differenzierten Einstellbarkeit der Axiallastaufnahme fuer die einzelnen Lagerbereiche, sowie in der Moeglichkeit, mit dieser Einstellbarkeit die Lagerbelastung gleichmaessig oder abgestuft oder eventuellen Betriebszustaenden angepasst zu verteilen. Dabei bleibt der Ausgleich von eventuellen Durchbiegungen der Welle voll erhalten und solche haben auf die Trageigenschaften keinerlei störenden Einfluss mehr. Die Axiallageranordnung kann in diesem Zusammenhang auch taumelfaehig ausgebildet werden.

Weitere Einzelheiten und Merkmale ergeben sich aus der Beschreibung beispielsweiser Ausfuehrungsformen anhand der Zeichnung. In dieser zeigt

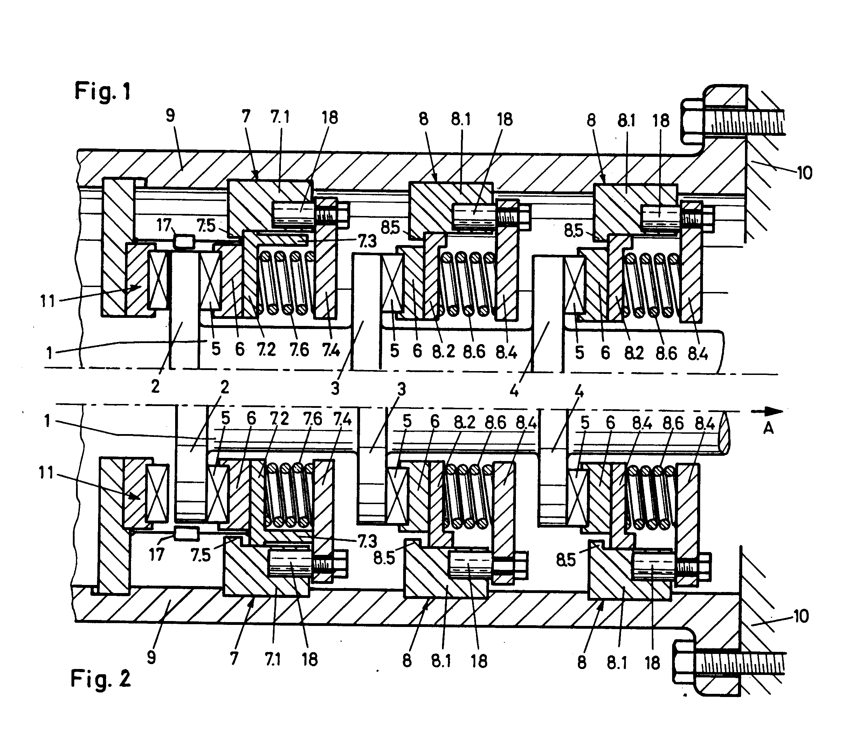

≪ Fig. 1      Axiallageranordnung bei Axiallast = 0

Fig. 2      Axiallageranordnung bei Axiallast > 0 ≫

Fig. 3      Daempfungseinrichtung

Fig. 4      hydraulische Variante einer Axiallageranordnung

Fig. 5      geteilte Axiallageranordnung.

Eine Welle 1 (Fig. 1) weist drei flanschartige Wellenbunde 2, 3, 4 auf und ist in einem (nicht dargestellten) Radiallager gelagert. Gegenüber einer ersten Stirnfläche jedes Wellenbundes 2, 3, 4 sind Lagermittel 5 in einer bei Axiallagern üblichen Weise angeordnet. Vorzugsweise sind diese Lagermittel Lagersegmente. Diese Lagermittel 5 sind je in wenigstens einem Träger 6 gehalten, der je mit wenigstens einer Axialkrafteinstelleinrichtung 7, 8 verbunden ist. Diese Axialkrafteinstelleinrichtungen 7, 8 sitzen in einfach Axiallagergehäuse 9, das an ein Radiallagergehäuse oder ein sonstiges Maschinengehäuse 10 angebaut ist. Gegenüber dem Wellenbund 2 am Ende der Welle 1 ist wenigstens eine Axialkrafteinstelleinrichtung 1. Art 7 mit dem Träger 6 für die Lagermittel 5 verbunden, wogegen gegenüber den anderen, innenliegenden Wellenbunden 3 und 4 Axiallagereinstelleinrichtungen 2. Art 8 mit dem Träger 6 für die Lagermittel 5 verbunden sind.

Die Axialkrafteinstelleinrichtung 1. Art 7 weist ein Einrichtungsgehäuse 7.1 auf, welches im Axiallagergehäuse 9 sitzt und wenigstens eine erste Druckplatte 1. Art 7.2 gleitend verschiebbar trägt. Diese erste Druckplatte 1. Art 7.2 weist wenigstens ein Stützelement 7.3 auf, welches sich gegen eine zweite Druckplatte 7.4 erstreckt und an dieser zur Anlage bringbar ist. Mit der dem Träger 6 für die Lagermittel 5 zugewandten Seite ist diese erste Druckplatte 1. Art 7.2 an einem Anschlag 7.5 zur Anlage bringbar. Die zweite Druckplatte 7.4 ist mit einer Einstelleinrichtung 18 einstellbar oder justierbar mit dem Einrichtungsgehäuse 7.1 verbunden. Zwischen diesen beiden Druckplatten ist wenigstens ein federelastisches Element, beispielsweise wenigstens eine Schraubenfeder 7.6, an diesen anliegend angeordnet.

Die Axialkrafteinstelleinrichtung 2. Art 8 ist praktisch gleich aufgebaut wie die Axialkrafteinstelleinrichtung 7. Sie weist ebenfalls ein Einrichtungsgehäuse 8.1 auf, das im Axiallagergehäuse 9 sitzt und wenigstens eine erste Druckplatte 2. Art 8.2 gleitend verschiebbar trägt. Diese erste Druckplatte 2. Art 8.2 ist mit der dem Träger 6 für die Lagermittel 5 zugewandten Seite an einem Anschlag 8.5 zur Anlage bringbar. Gegenüber der ersten Druckplatte 2. Art 8.2 ist eine zweite Druckplatte 8.4 mit einer Einstelleinrichtung 18 einstell- oder justierbar mit dem Einrichtungsgehäuse 8.1 verbunden, wobei zwischen diesen Druckplatten wenigstens ein federelastisches Element, beispielsweise wenigstens eine Schraubenfeder 8.6, an diesen anliegend angeordnet ist.

Gegenüber einer zweiten, aussenliegenden Stirnseite des Wellenbundes 2 ist mit dem im Ruhezustand üblichen Lagerspiel ein Gegenlager 11 zur Aufnahme einer Gegenaxialkraft vorgesehen, welches ebenfalls im Axiallagergehäuse 9 sitzt. Dieses Gegenlager kann ebenfalls als ein Segmentlager in üblicher Bauart ausgebildet und mit Lagerspieleinstellungsmitteln 17 zur Einstellung des Lagerspiels relativ zum Hauptlager versehen sein.

Die Einrichtungen für die Oelzufuhr zu den Lagermitteln und andere Baugruppen können in üblicher Weise ausgebildet sein.

Im Ruhezustand, d.h. bei einem Axialschub A mit dem Wert 0, befindet sich der Wellenbund 2 zwischen dem Gegenlager 11 und den Lagermitteln der Axialkrafteinstelleinrichtung 1. Art 7. Auch die anderen Wellenbunde 3, 4 stehen vor den ihnen zugeordneten Lagermitteln 5 oder weisen ein kleines Spiel auf zwischen den Wellenbunden 3, 4 und den ihnen zugeordneten Lagermitteln 5.

In einer ersten Funktionsvariante sind innerhalb der einzelnen Stufen, welche den drei Wellenbunden 2, 3, 4 zugeordnet sind, gleiche Axialkrafteinstelleinrichtungen 1. bzw. 2. Art in einfacher oder mehrfacher Anzahl eingebaut, aber von Stufe zu Stufe verschieden vorgespannt, indem die federelastischen Elemente entsprechend mit den zweiten Druckplatte 7.4 bzw. 8.4 und mit je zwischen diesen und den entsprechenden Einrichtungsgehäusen 7.1, 8.1 angeordneten Einstelleinrichtungen 18 vorgespannt werden. Auch sind die Lagerspiele bei einzelnen Stufen verschieden gross, wobei diese vom Maschinengehäuse 10 nach aussen hin zunehmen.

Bei beginnendem Anwachsen des Axialschubes A trägt zunächst der Wellenbund 4 und je nach der eingestellten Vorspannung bzw. Gegenkraft der Axialkrafteinstelleinrichtungen früher oder später sukzessive der Wellenbund 3 und der Wellenbund 2. Bei weiterem Anwachsen des Axialschubes A wird die Welle 1 solange verschoben, bis wenigstens eines der Stützelemente 7.3 der Axialkrafteinstelleinrichtung 1. Art an der zweiten Druckplatte 7.4 anliegt. Jede weitere Axialschuberhöhung wird nun nur von dieser Druckplatte 7.4 aufgenommen.

Dabei kann eine verschieden grosse Axialschubaufnahme der einzelnen Stufen durch unterschiedliche Federelemente, d.h. solche mit unterschiedlichen Kennlinien zum Aufbau der Gegenkraft, erreicht werden.

In Fig. 2 ist die Axiallageranordnung bei eingeleitetem Axialschub von der Grösse dargestellt, dass alle Stufen tragen und das Stützelement 7.3 der ersten Druckplatte 1. Art 7.2 an der zweiten Druckplatte 7.4 anliegt.

Bei dieser Variante einer Axiallageranordnung kann es vorteilhaft sein, anstelle der zweiten Druckplatten 7.4, 8.4, welche mit dem Einrichtungsgehäuse 7.1, 8.1 verbunden sind, eine Positionier- oder Feineinstelleinrichtung 18 für jene und somit für die Vorspannkräfte zu verwenden.

Es ist aber auch möglich, die Axialkrafteinstelleinrichtung 1. Art 7 ohne federelastisches Element 7.6, also im wesentlichen als festes Lager, auszubilden. Dabei müssen die Lagerspiele so eingestellt werden, dass zuerst die Wellenbunde 3 und 4 Axiallast aufnehmen und erst dann das Stützelement 7.3 an der zweiten Druckplatte 7.4 zur Anlage kommt.

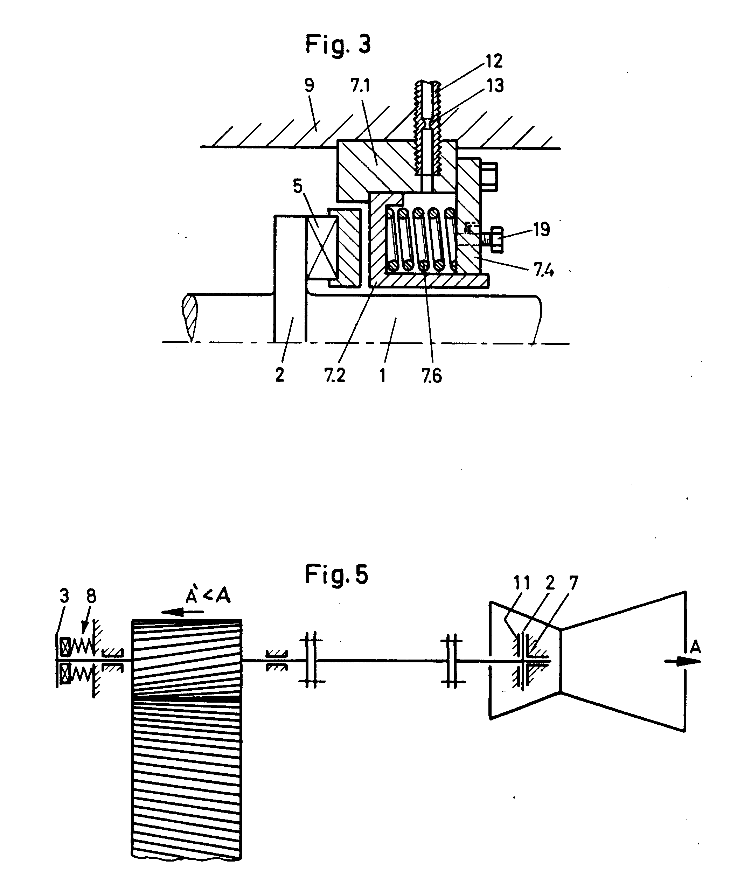

Es ist aber auch möglich, in jeder der Axialkrafteinstelleinrichtungen 7, 8 eine Dämpfeinrichtung 12, 13 (Fig.3) zur Dämpfung von axialen Schwingungen der Welle vorzusehen. Eine solche Dämpfungseinrichtung 12, 13 kann beispielsweise in das Einrichtungsgehäuse 7.1, 8.1 einer Axialkrafteinstelleinrichtung 7, 8 integriert sein, wobei deren Gehäuse und die Druckplatten öldicht ausgebildet sind. An einer Stelle des Gehäuses 7.1, 8.1 mündet eine mit einer eventuell einstellbaren Drossel 13 versehene Verbindungsleitung 12 zu einem Ausgleichsbehälter (nicht dargestellt), welche die Dämpfeinrichtung bilden. Ausserdem kann beispielsweise eine der Druckplatten eine Entlüftungsschraube (19) aufweisen. Diese kann auch als Regulierdrossel ausgebildet sein.

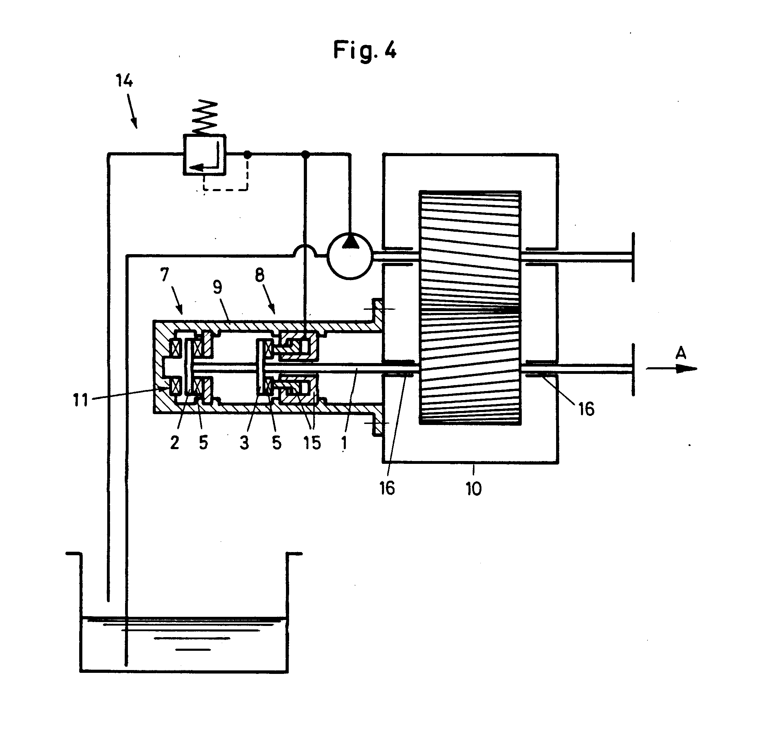

Bei einer weiteren Ausführungsform einer Axiallageranordnung können die Axialkrafteinstelleinrichtungen (1. Art und 2. Art) 7, 8 anstelle von federelastischen Elementen als einfach- oder doppelwirkende Kolben-Zylindereinrichtungen 15 ausgebildet sein, welche an einen üblichen Steueroder Regelkreis 14 angeschlossen sind (Fig. 4). Dabei kann die erste Druckplatte 1. Art die Funktion eines Kolbens, der Druckplatte und/oder des Stützelementes ausüben.

Bei einer weiteren Ausführungsform der Axiallageranordnung können einige Lagerstufen räumlich getrennt von anderen Lagerstufen angeordnet sein. Beispielsweise kann die die axiale Verschiebung begrenzende Lagerstufe (welche die Axialkrafteinstelleinrichtung 1. Art enthält) in der Nähe einer Turbomaschine liegen, wogegen sich die anderen Lagerstufen durch Kupplungen und Zwischenwellen getrennt im Bereich eines Getriebes befinden (Fig. 5). Insbesondere in Verbindung mit einem Gegenlager 11 kann so ein grösstmöglicher Schutz der Turbomaschine durch eine sehr genaue axiale Lagerung ihrer Rotoren erreicht werden, weil weniger Bauteile Beiträge zu den Verschiebungen zufolge der Wärmedehnung leisten.

Bei einer weiteren Ausführungsform kann in wenigstens einer zweiten Stufe wenigstens eine Axialkrafteinstelleinrichtung 1. Art 7 vorgesehen sein. Dabei sind aber die zu verschiedenen Stufen gehörenden Axialkrafteinstelleinrichtungen 1. Art so eingestellt, dass sie nicht gleichzeitig mit ihren Stützelementen 7.3 an den jeweiligen zweiten Druckplatten 7.4 anliegen. Dass also das federlose Tragen sukzessive und erst dann erfolgt, wenn beispielsweise die andere Stufe (wegen Materialfehler, Ueberlast, schlechter Schmierung etc.) beschädigt wurde und praktisch ausgefallen ist. Dabei kann mit dem Tragbeginn via Stützelement 7.3 in dieser Stufe ein Signal generiert werden, das auf das Instrumentenbrett der Ueberwachungsanlage übertragen wird und dort anzeigt, dass nur noch mit einer bestimmten Maximallast der Anlage gefahren werden darf.

Die erfindungsgemässe Axiallageranordnung ist überall dort anwendbar, wo sehr hohe Axiallasten auftreten, welche von einem einstufigen Axiallager aus Materialgründen oder zufolge konstruktiver Gründe nicht mehr aufgenommen werden können. Dies kann bei Turbomaschinen, Schneckenextruderanlagen usw. der Fall sein.

BEZUGSZEICHEN

A    Axialschub
1    Welle

2  
3  }  Wellenbunde  
4  

5    Lagermittel
6    Träger
7    Axialkrafteinstelleinrichtung 1. Art
7.1    Einrichtungsgehäuse der Axialkrafteinstelleinrichtung 1. Art
7.2    erste Druckplatte 1. Art
7.3    Stützelement
7.4    zweite Druckplatte
7.5    Anschlag
7.6    Schraubenfeder
8    Axialkrafteinstelleinrichtung 2. Art
8.1    Einrichtungsgehäuse der Axialkrafteinstelleinrichtung 2. Art
8.2    erste Druckplatte 2. Art
8.4    zweite Druckplatte
8.5    Anschlag
8.6    Schraubenfeder
9    Axiallagergehäuse
10    Maschinengehäuse
11    Gegenlager
12    Oelzuleitung
13    Drossel
14    hydraulische Steuereinrichtung
15    Kolbenzylindereinrichtung
16    Radiallager
17    Lagerspieleinstellungsmittel
18    Einstelleinrichtung
19    Entlüftungsschraube / Regulierdrossel

**Patentansprüche**

1. Axiallageranordnung fuer hohe Axialkraefte fuer eine Welle [1] mit diese abstuetzenden Lagermitteln, die aus mehreren, in Achsrichtung begrenzt beweglichen und in Achsrichtung hintereinander angeordneten Axiallagern [5] bestehen, welche im wesentlichen in einem Axiallagergehaeuse [9] angeordnet sind und dort zur Aufnahme der Axialkraft abstuetzbar sind, dadurch **gekennzeichnet,** dass zur Festlegung der von den einzelnen Axiallagern [5] aufzunehmenden Axialkraft wenigstens eine im Axiallagergehaeuse [9] sitzende Axialkrafteinstelleinrichtungung [7, 8] vorgesehen ist mit einem zwischen zwei Druckplatten [7.2, 8.2; 7.4, 8.4] vorgespannten federelastischen Element [7.6, 8.6], wobei sich die erste [7.2; 8.2] der beiden Druckplatten [7.2, 8.2; 7.4, 8.4] am Axiallagergehaeuse [9] in einer Ausgangslage abstuetzt und bei belasteter Welle [1] ueber eines der Axiallager [5] gegen die Vorspannkraft des feder elastischen Elementes [7.6; 8.6] verlagerbar ist und die zweite Druckplatte [7.4, 8.4] am Axiallagergehaeuse [9] ortsfest gehalten ist, waehrend sich das andere Axiallager [5] bei belasteter Welle (1) erst ab einem durch Axialspiel vorgegebenen Verschiebeweg am Axiallagergehaeuse [9] abstuetz.

2. Axiallageranordnung nach Anspruch 1, dadurch **gekennzeichnet,** dass der Verschiebeweg durch die Axialkrafteinstelleinrichtung [7, 8] einstellbar ist.

**3.** Axiallageranordnung nach einem der Ansprueche 1 bis 2, dadurch **gekennzeichnet,** dass zur Erzielung einer einstellbaren Vorspannkraft im federleastischen Element [7.6] an einer der beiden Druckplatten [7.2, 7.4] oder am Anschlag [7.5] eine Einstelleinrichtung [19] vorgesehen ist.

**4.** Axiallageranordnung nach einem der Ansprueche 1 bis 3, dadurch **gekennzeichnet,** dass jedem Axiallager (5) je eine Axialkrafteinstelleinrichtung (7, 8) zugeordnet ist, die einzeln einstellbar oder regelbar ist.

**5.** Axiallageranordnung nach einem der Ansprueche 1 bis 4, dadurch **gekennzeichnet,** dass die Axialkrafteinstelleinrichtung [7, 8] eine hydraulische oder pneumatische Einrichtung zur Axialkrafteinstellung aufweist.

**6.** Axiallageranordnung nach einem der Ansprueche 1 bis 5, dadurch **gekennzeichnet,** dass die Axialkrafteinstelleinrichtung [7] in einer ersten Art einen Wegbegrenzer [7.3] zur Begrenzung einer Axialverschiebung der Welle [1] oder eines Teiles derselben aufweist.

**7.** Axiallageranordnung nach Anspruch 6, dadurch **gekennzeichnet,** dass die Axialkrafteinstelleinrichtung [7] erster Art ein Gehaeuse [7.1] aufweist, in dem wenigstens eine erste Druckplatte erster Art [7.2] gleitend sitzt, welche mittelbar oder unmittelbar ein Axiallager [5] traegt und an einem federelastischen Element [7.6] anliegt, welches sich auf einer zweiten Druckplatte [7.4], die einstellbar mit dem Gehaeuse [7.1] verbunden ist, abstuetzt, wobei dieses auf seiner der ersten Druckplatte [7.2] benachbarten Seite einen Anschlag [7.5] zur Erzielung einer Vorspannkraft im federelastischen Element [7.6] fuer die erste Druckplatte [7.2] aufweist und dass diese wenigstens ein Stuetzelement [7.3] besitzt und damit entgegen der Kraft des federelastischen Elementes [7.6] an einem die Funktion eines wegbegrenzenden Mittels ausuebenden Bauteils zur Anlage bringbar ist.

**8.** Axiallageranordnung nach einem der Ansprueche 6 bis 7, dadurch **gekennzeichnet,** dass die Axialkrafteinstelleinrichtung erster Art [7] als eine hydraulische oder pneumatische Stellvorrichtung zur Axialkrafteinstellung und Verschiebewegbegrenzung mit einer Steuereinrichtung ausgebildet ist.

**9.** Axiallageranordnung nach einem der Ansprueche 1 bis 5, dadurch **gekennzeichnet,** dass die Axialkrafteinstelleinrichtung [8] in einer zweiten Art zur freien Axialverschiebung der ganzen Welle oder eines Teiles derselben eingerichtet ist.

**10.** Axiallageranordnung nach Anspruch 9 , dadurch **gekennzeichnet,** dass die Axialkrafteinstelleirichtung [8] zweiter Art ein Gehaeuse [8.1] aufweist in dem wenigstens eine erste Druckplatte zweiter Art [8.2] gleitend sitzt, welche mittelbar oder unmittelbar ein Axiallager [5] traegt und an einem federelastischen Element [8.6] anliegt, welches sich auf eienr zweiten Druckplatte [8.4], die einstellbar mit dem Gehaeuse [8.1] verbunden ist, abstuetzt, wobei dieses auf seiner der ersten Druckplate [8.2] benachbarten Seite einen Anschlag [8.5] zur Erzielung einer Vorspannkraft im federelastischen Element fuer die erste Druckplatte [8.2] aufweist.

**11.** Axiallageranordnung nach einem der Ansprueche 9 bis 10, dadurch **gekennzeichnet,** dass die Axialkrafteinstelleinrichtung [8] zweiter Art als eine hydraulische oder pneumatische Stellvorrichtung zur Axialkrafteinstellung ohne Verschiebewegbegrenzung mit einer Steuereinrichtung ausgebildet ist.

**12.** Axiallageranordnung nach einem der Ansprueche 1 bis 11, dadurch **gekennzeichnet,** dass wenigstens ein Gegenaxiallager [11] zur Aufnahme einer Gegenaxialkraft vorgesehen ist.

**13.** Axiallageranordnung nach Anspruch 12, dadurch **gekennzeichnet,** dass das Gegenaxiallager [11] Mittel [17] fuer eine von einem Axiallager [5] gesteuerte Lagerspieleinstellung aufweist.

**14.** Axiallageranordnung nach einem der Ansprueche 1 bis 13, dadurch **gekennzeichnet,** dass sie axial voneinander getrennt angeordnete Axiallager [5] aufweist, zwischen welchen andere Elemente einer mit der Axiallageranordnung in Wirkverbindung stehenden Maschine vorgesehen sind.

**15.** Axiallageranordnung nach einem der Ansprueche 1 bis 14, dadurch **gekennzeichnet,** dass sie an einer Extrudiereinrichtung, insbesondere einer Schraubenextrudiereinrichtung, vorgesehen ist.

**Claims**

1. Axial bearing arrangement for high axial loads for a shaft [1] supported by bearing means comprising a plurality of axial bearings [5] which are of restricted movability in the axial direction and arranged one behind the other in the axial direction, which are arranged substantially in an axial bearing housing [9] and supported thereat for receiving an axial load, **characterised in that,** for setting an axial load to be accommodated by the individual axial bearings [5], is provided at least one axial-load-setting device [7, 8] which is seated in the axial bearing housing [9], having a spring-elastic element [7.6, 8.6] which is pretensioned between two pressure plates [7.2, 8.2; 7.4, 8.4], in which respect the first [7.2; 8.2] of the two pressure plates [7.2, 8.2; 7.4, 8.4] is supported in the axial bearing housing [9] in an initial position and, with loaded shaft [1], displacable via an axial bearing [5] against the pretensional force of the spring-elastic element [7.6; 8,6], and the second pressure plate [7.4, 8.4] is positionally held on the axial bearing housing [9], whilst, with loaded shaft [1], the other axial bearing [5] is supported against the axial bearing housing [9] only after a displacement path as specified by an axial play.

2. Axial bearing arrangement according to claim 1, **characterised in that** the displacement path is set by means of the axial-load-setting device [7, 8].

3. Axial bearing arrangement according to one of claims 1 to 2, **characterized in that** a setting device [19] is provided on one of the two pressure plates [7.2, 7.4] or at the stop [7.5] for the purpose of establishing an adjustable pretentional force in the spring-elastic element [7.6].

4. Axial bearing arrangement according to one of claims 1 to 3, **characterized in that** each axial bearing [5] is associated with a respective axial-load-setting device [7, 8] which is individually settable or controllable.

5. Axial bearing arrangement according to one of claims 1 to 4, **characterised in that** the axial-load-setting device [7, 8] comprises a hydraulic or pneumatic device for setting the axial load.

6. Axial bearing arrangement according to one of claims 1 to 5, **characterised in that** the axial-load-setting device [7] of a first type comprises a path restrictor [7.3] for restricting an axial displacement of the shaft [1] or part thereof.

7. Axial bearing arrangement according to claim 6, **characterised in that** the axial-load-setting device [7] of a first type comprises a housing [7.1], in which is slidingly seated at least one first pressure plate of the first type [7.2], which directly or indirectly carries an axial bearing [5] and abuts a spring-elastic element [7.6] which supports itself against a second pressure plate [7.4] which is adjustably connected to the housing [7.1], in which respect this has a stop [7,5] on its side adjacent the first pressure plate [7.2] for the purpose of establishing a pretensional load in the spring-elastic element [7.6] for the first pressure plate [7.2], and that this has at least one support element [7.3] so that it can be abutted against the load of the spring-elastic element [7.6] against a component exercising the function of a path-restricting means.

8. Axial bearing arrangement according to one of claims 6 to 7, **characterized in that** the axial-load-setting device of the first type [7] is a hydraulic or pneumatic setting device for setting the axial load and displacement-path restriction by means of a control device.

9. Axial bearing arrangement according to one of claims 1 to 5, **characterized in that** the axial-load-setting device [8] of a second type is arranged for free axial displacement of the entire shaft or part thereof.

10. Axial bearing arrangement according to claim 9, **characterized in that** the axial-load-setting device [8] of a second type comprises a housing [8.1] in which is slidingly seated at least one first pressure plate of a second type [8.2], which directly or indirectly supports an axial bearing [5] and abuts a spring-elastic element [8.6] which supports itself on a second pressure plate [8.4] which is adjustably connected to the housing [8.1], in which respect this has a stop [8.5] at its side adjacent the first pressure plate [8.2] for the purpose of establishing a pretensional force in the spring-elastic element for the first pressure plate [8.2].

11. Axial bearing arrangement according to one of claims 9 to 10, **characterized in that** the axial-load-setting device [8] of a second type is a hydraulic or pneumatic setting device for setting the axial load without displacement-path restriction with a control device.

12. Axial bearing arrangement according to one of claims 1 to 11, **characterised in that** at least one counter-axial bearing [11] is provided for receiving a counter-axial load.

13. Axial bearing arrangement according to claim 12, **characterised in that** the counter-axial bearing [11] has means [17] for a bearing-play setting which is controlled by an axial bearing [5].

14. Axial bearing arrangement according to one of claims 1 to 13, **characterised in that** it has axially separately arranged axial bearings [5], between which are provided other elements of a machine which is actively connected to the axial bearing arrangement.

15. Axial bearing arrangement according to one of claims 1 to 14, **characterised in that** they are provided on an extruding device, in particular a bolt-extruding device.

**Revendications**

1. Agencement de paliers axiaux pour forces axiales élevées, destiné à un arbre (1), comportant des moyens de paliers supportant celui-ci et se composant de plusieurs paliers axiaux (5) mobiles de façon limitée en direction axiale et disposés l'un derrière l'autre en direction axiale, qui sont disposés sensiblement dans un carter (9) de paliers axiaux et peuvent s'y appuyer pour résister à la force axiale, caractérisé en ce qu'il est prévu, pour déterminer la force axiale à laquelle doivent résister les paliers axiaux individuels (5), au moins un dispositif (7, 8) de réglage de force axiale situé dans le carter (9) de paliers axiaux, comportant un élément élastique (7.6, 8.6) sollicité entre deux plaques de pression (7.2, 8.2; 7.4, 8.,4), la première (7.2; 8.2) des deux plaques de pression (7.2, 8.2; 7.4, 8.,4) s'appuyant dans une position d'origine sur le carter (9) des paliers axiaux et pouvant venir sur l'un des paliers axiaux (5), en opposition à la force de sollicitation de l'élément élastique (7. 6; 8.6) lorsque l'arbre (1) est chargé, et la deuxième plaque de pression (7.4, 8.4) étant maintenue de façon fixe sur le carter (9) de paliers axiaux, alors que l'autre palier axial (5) ne s'appuie sur le carter (9) de paliers axiaux, lorsque l'arbre (1) est chargé, qu'à partir d'une course de déplacement déterminée par un jeu axial.

2. Agencement de paliers axiaux selon la revendication 1, caractérisé en ce que la course de déplacement est réglable au moyen du dispositif (7, 8) de réglage de forces axiales.

3. Agencement de paliers axiaux selon l'une des revendications 1 ou 2, caractérisé en ce qu'un dispositif de réglage (19) est prévu sur l'une des deux plaques de pression (7.2, 7.4) ou sur la butée (7.5) pour engendrer une force de sollicitation réglable dans l'élément élastique (7.6).

4. Agencement de paliers axiaux selon l'une des revendications 1 à 3, caractérisé en ce qu'il est associé à chaque palier axial (5) un dispositif (7.8) de réglage de forces axiales qui peut être réglé ou ajusté de façon individuelle.

5. Agencement de paliers axiaux selon l'une des revendications 1 à 4. caractérisé en ce que le dispositif (7.8) de réglage de forces axiales comprend un dispositif hydraulique ou pneumatique de réglage de forces axiales.

6. Agencement de forces axiales selon l'une des revendications 1 à 5, caractérisé en ce que le dispositif (7) de réglage de forces axiales présente, selon un premier type, un limiteur de course (7.3) pour limiter un déplacement axial de l'arbre (1) ou d'une partie de celui-ci.

7. Agencement de paliers axiaux selon la revendication 6, caractérisé en ce que le dispositif (7) de réglage de forces axiales du premier type comprend un carter (7.1) dans lequel repose à glissement au moins une première plaque de pression d'un premier type (7.2) qui porte directement ou indirectement un palier axial (5) et qui repose sur un élément élastique (7.6) qui s'appuie sur une deuxième plaque de pression (7.4) qui est reliée de façon réglable au boîtier (7.1), ce dernier comportant sur son côté voisin de la première plaque de pression (7.2) une butée (7.5) pour engendrer une force de sollicitation réglable dans l'élément élastique (7.6), prévu pour la première plaque de pression (7.2) et en ce que celle-ci possède au moins un élément de support (7.3) et peut de cette manière, être amenée en butée, en opposition à la force de l'élément élastique (7.6), sur un composant exerçant la fonction d'un moyen limiteur de course.

8. Agencement de paliers axiaux selon l'une des revendications 6 ou 7, caractérisé en ce que le dispositif de réglage de forces axiales du premier type (7) consiste en un dispositif de réglage hydraulique ou pneumatique, prévu pour le réglage de forces axiales et la limitation de course, comprenant un dispositif de commande.

9. Agencement de paliers axiaux selon l'une des revendications 1 à 5, caractérisé en ce que le dispositif (8) de réglage de forces axiales d'un deuxième type est agencé pour permettre un déplacement axial libre de tout l'arbre ou d'une partie de celui-ci.

10. Agencement de paliers axiaux selon la revendication 9, caractérisé en ce que le dispositif (8) de réglage de forces axiales de deuxième type comporte un carter (8.1) dans lequel repose à glissement au moins une première plaque de pression d'un deuxième type (8.2) qui porte de façon directe ou indirecte un palier axial (5) et repose sur un élément élastique (8.6) qui s'appuie sur une deuxième plaque de pression (8.4) qui est reliée de façon réglable au carter (8.1), celui-ci présentant sur son côté voisin de la première plaque de pression (8.2) une butée (8.5) pour engendrer dans l'élément élastique une force de sollicitation pour la première plaque de pression (8.2).

11. Agencement de paliers axiaux selon l'une des revendications 9 ou 10, caractérisé en ce que le dispositif (8) de réglage de forces axiales du deuxième type consiste en un dispositif de réglage hydraulique ou pneumatique de réglage de forces axiales, sans limitation de course, à dispositif de commande.

12. Agencement de paliers axiaux selon l'une des revendications 1 à 11, caractérisé en ce qu'il est prévu au moins un contre-palier axial (11) pour résister à une contre-force axiale.

13. Agencement de paliers axiaux selon la revendication 12, caractérisé en ce que le contre-palier axial (11) comprend des moyens (17) prévus pour un réglage de jeu de paliers commandé par un palier axial (5).

14. Agencement de paliers axiaux selon l'une des revendications 1 à 13, caractérisé en ce qu'il comporte des paliers axiaux (5) disposés en étant axialement séparés l'un de l'autre, entre lesquels sont prévus d'autres éléments d'une machine en liaison active avec l'agencement de paliers axiaux.

15. Agencement de paliers axiaux selon l'une des revendications 1 à 14, caractérisé en ce qu'il est prévu sur un dispositif d'extrusion (5), et en particulier sur un dispositif d'extrusion à vis.

Fig. 1

Fig. 2

## Fig. 3

## Fig. 5

# Fig. 4